# EUROPEAN PATENT APPLICATION

(11) **EP 1 874 010 A1**
(43) Date of publication of application: **02.01.2008**
(21) Application number: 07102175.2
(22) Date of filing: 12.02.2007
(51) Int. Cl.: H04M 1/253, H04M 1/247, H04N 7/14, G10L 13/00, G10L 15/00

(54) **Video communication apparatus using VoIP and method of operating the same**

(30) Priority: 30.06.2006 KR 20060060681
(71) Applicant: Samsung Electronics Co., Ltd., Suwon-si, Gyeonggi-Do (KR)
(72) Inventor: Seo, Kyung-hee, Gyeonggi-do (KR)
(74) Representative: Grootscholten, Johannes A.M.

(57) **Abstract**

A video communication apparatus (10) using voice over Internet protocol, VoIP, is provided. The video communication apparatus using a VoIP includes a data reception unit (100) receiving one or more data signals among video data, voice data, and text data; a data processing control unit (300) converting voice data received from the data reception unit into text data or converting text data received from the data reception unit into voice data; a voice output unit (400) outputting the voice data processed by the data processing control unit as voice signals; and a display unit (500) displaying the text data processed by the data processing control unit as text signals.

## Description

### CROSS-REFERENCE TO RELATED PATENT APPLICATION

This application claims priority from Korean Patent Application No. 10-2006-0060681, filed on June 30, 2006, in the Korean Intellectual Property Office, the disclosure of which is incorporated herein in its entirety by reference.

### BACKGROUND OF THE INVENTION

### 1. Field of the Invention

The present invention relates to a video communication apparatus using a voice over Internet protocol (VoIP) and a method of operating the same, and more particularly, to a video communication apparatus using a VoIP by which a video communication function is provided, through a VoIP, to a display device that is connected to a PC and an information processing device and displays a video signal and a user is free to transmit/receive speech or text, and a method of operating the same.

### 2. Description of the Related Art

A voice over Internet protocol (VoIP) is a widely known data communication packet network, called a voice packet network. The VoIP is applied to an Internet phone, which is a communication service providing a phone call through an IP phone network by converting speech data into IP data packets. Data packets include speech data packets and multimedia data packets, which is disclosed in Korean Laid-Open Patent Publication No. 2000-0022457.

However, Korean Laid-Open Patent Publication No. 2000-0022457 does not suggest an apparatus and method by which a user is free to output text or speech.

Korean Laid-Open Patent Publication No. 2001-0113471 suggests converting data input from VoIP packets from speech to text and combining the speech and text, which is disclosed in Korean Laid-Open Patent Publication No. 2002-0028501.

However, Korean Laid-Open Patent Publication Nos. 2001-0113471 and 2002-0028501 do not clearly suggest how speech can be converted into text in a display device using a VoIP.

### SUMMARY OF THE INVENTION

The present invention provides a method of providing a voice over Internet protocol (VoIP) network to a display device, such as a monitor connected to a PC, so that video call communication between display devices can be freely performed.

The present invention also provides an apparatus for freely converting voice to text and receiving/transmitting voice and text using a display device to which a VoIP network is provided.

The present invention also provides an apparatus for converting voice to text and receiving/transmitting voice and text between a display device to which a VoIP network is provided and an authorized cellular phone.

According to an aspect of the present invention, there is provided a video communication apparatus using a voice over Internet protocol (VoIP) comprising: a data reception unit receiving one or more data signals among video data, voice data, and text data; a data processing control unit converting voice data received from the data reception unit into text data or converting text data received from the data reception unit into voice data; a voice output unit outputting voice data processed by the data processing control unit as voice signals; and a display unit displaying text data processed by the data processing control unit as text signals.

According to an aspect of the present invention, there is provided a video communication apparatus using a VoIP comprising: a data input unit inputting one or more data signals among video data, voice data, and text data; a data processing control unit converting voice data received from the data input unit into text data or converting text data received from the data input unit into voice data; and a data transmission unit outputting the voice data or the text data of the data processing control unit via VoIP communication.

According to an aspect of the present invention, there is provided a data reception method of a video communication apparatus using VoIP communication, the method comprising: receiving one or more data signals among video data, voice data, and text data; converting the voice data into text data or converting the text data into voice data according to a previously set mode and the received data; and outputting the voice data or the text data obtained by the converting to a user.

According to an aspect of the present invention, there is provided a data transmission method of a video communication apparatus using VoIP communication, the method comprising: inputting one or more data signals among video data, voice data, and text data; converting the voice data into the text data or converting the text data into the voice data according to a previously set mode; and transmitting the converted voice data or the converted text data via VoIP communication.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram illustrating the operation of video communication apparatuses to which the present invention is applied according to an exemplary embodiment of the present invention;
FIG. 2 is a block diagram of a first VoIP device illustrated in FIG. 1;
FIG. 3 is a detailed block diagram of the first VoIP device illustrated in FIG. 2;
FIG. 4 is a flowchart illustrating a mode setting method according to an exemplary embodiment of the present invention;
FIG. 5 is a flowchart illustrating a data receiving method according to an exemplary embodiment of the present invention; and
FIG. 6 is a flowchart illustrating a data transmitting method according to an exemplary embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown.

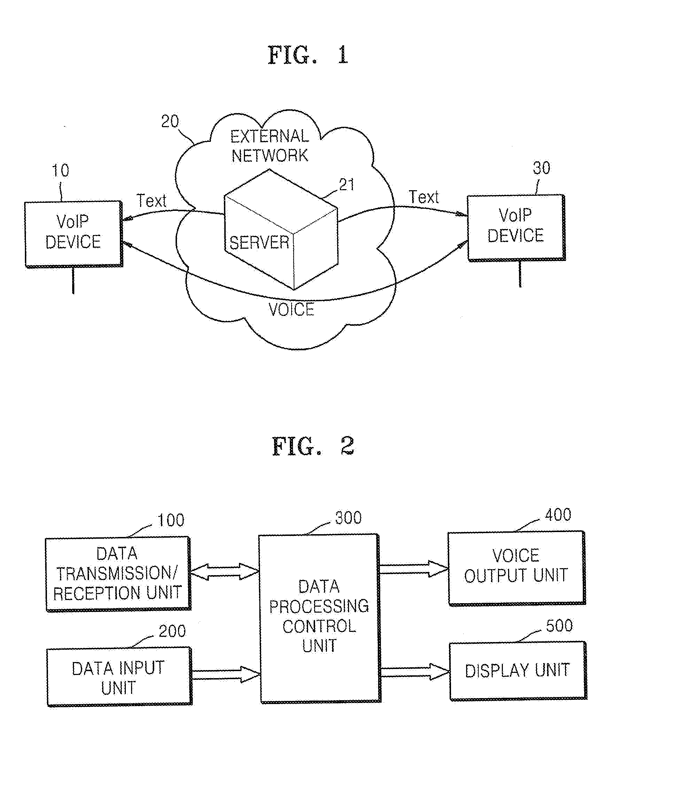

FIG. 1 is a diagram illustrating the operation of video communication apparatuses to which exemplary embodiments of the present invention are applied. Referring to FIG. 1, a first voice over Internet protocol (VoIP) device 10 and a second VoIP device 30, which are video communication apparatuses, are connected to each other via an external network 20 comprising an Internet/Intranet environment.

If data packets that are transmitted and received between the first VoIP device 10 and the second VoIP device 30 are video and voice signals, the data packets are transmitted and received through a transport protocol used in a LAN. If a transport protocol of the video and voice signal data packets is different from that of text data packets, the data packets are transmitted and received through a separate server 21.

The server 21 receives text data from the first VoIP device 10, which is on a transmission side, and transmits the text data to the second VoIP device 30, which is on a reception side.

The constitution and operation of the first VoIP device 10 will now be described with reference to FIGS. 2 through 6.

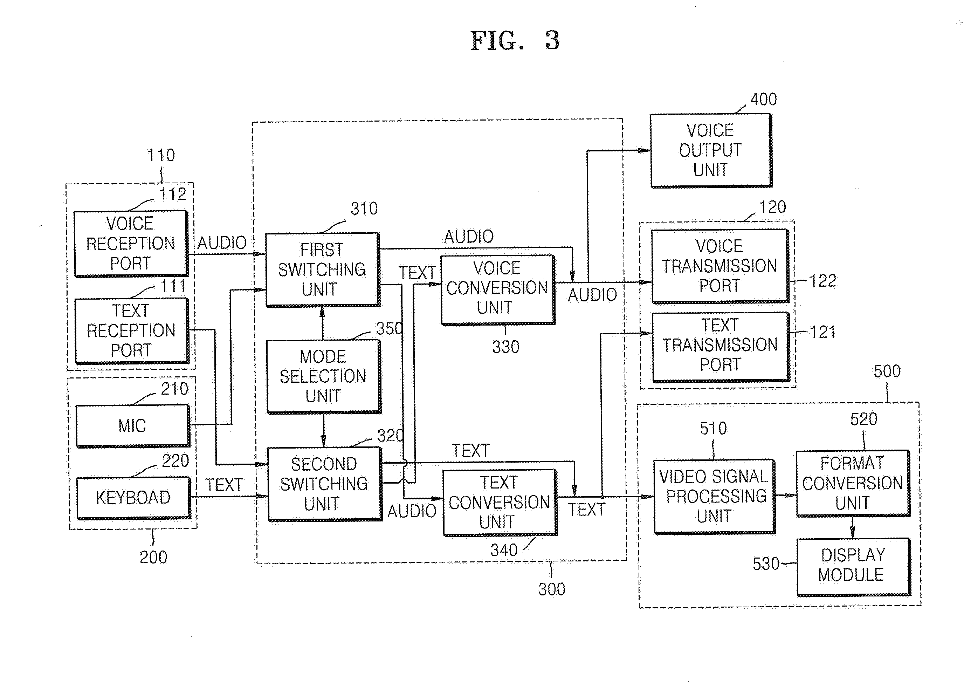

FIG. 2 is a block diagram of the first VoIP device 10 illustrated in FIG. 1, and FIG. 3 is a detailed block diagram of the first VoIP device illustrated in FIG. 2.

Referring to FIG. 2, the first VoIP device 10 comprises a data transmission/reception unit 100 that transmits/receives one or more data signals among video data, voice data, and text data; a data input unit 200 that inputs one or more data signals among the video data, voice data, and text data; a data processing control unit 300 that converts voice data received from the data transmission/reception unit 100 or the data input unit 200 into text data or converts text data into voice data; a voice output unit 400 that outputs voice data processed by the data processing control unit 300 as voice signals; and a display unit 500 that displays text data processed by the data processing control unit 300 as text signals.

The constitution of the first VoIP device 10 will now be described in detail with reference to FIG. 3. Referring to FIG. 3, the data transmission/reception unit 100 can be realized as a network card, a modem card, etc. comprising a data reception unit 110 and a data transmission unit 120. The data input unit 200 comprises a microphone 210 and a camera (not shown), which are used for a video call, a keyboard 220, a mouse (not shown), etc.

The data processing control unit 300 comprises a voice conversion unit 330 that converts input text data into voice signals; a text conversion unit 340 that converts input voice data into text; a first switching unit 310 that receives voice data from the data reception unit 110 and transmits the voice data to one of the voice output unit 400 and the text conversion unit 340; a second switching unit 320 that inputs text data received from the data reception unit 110 to one of the display unit 500 and the voice conversion unit 330; and a mode selection unit 350 that controls the first switching unit 310 and the second switching unit 320.

The voice conversion unit 330, the text conversion unit 340, the first switching unit 310, and the second switching unit 320 can be realized in hardware. However, when they are realized in software, a storage device may be used to store the software program.

The mode selection unit 350 can be operated according to a selection signal of a storing means (not shown) that stores a setting value inside and outside the data processing control unit 300 and/or according to a hot key (not shown) on a keyboard 220 of the data input unit 200 or a direct key (not shown) formed outside of the device of the exemplary embodiment of the present invention. The data processing control unit 300 can be realized as a chip.

The voice output unit 400 comprises a speaker (not shown) or a voice output port (not shown). The display unit 500 comprises a video signal processing unit 510 that processes a video signal output from the data processing control unit 300, a format conversion unit 520 that converts the video signal output by the video signal processing unit 510 into an appropriate display format, and a display module 530 comprising an LCD module, a PDP module, an image projection device, a CDT, etc. that displays the video data converted into the appropriate display format.

Operations of the first VoIP device 10 for setting a mode, receiving data, and transmitting data, will now be described with reference to FIGS. 2 through 6.

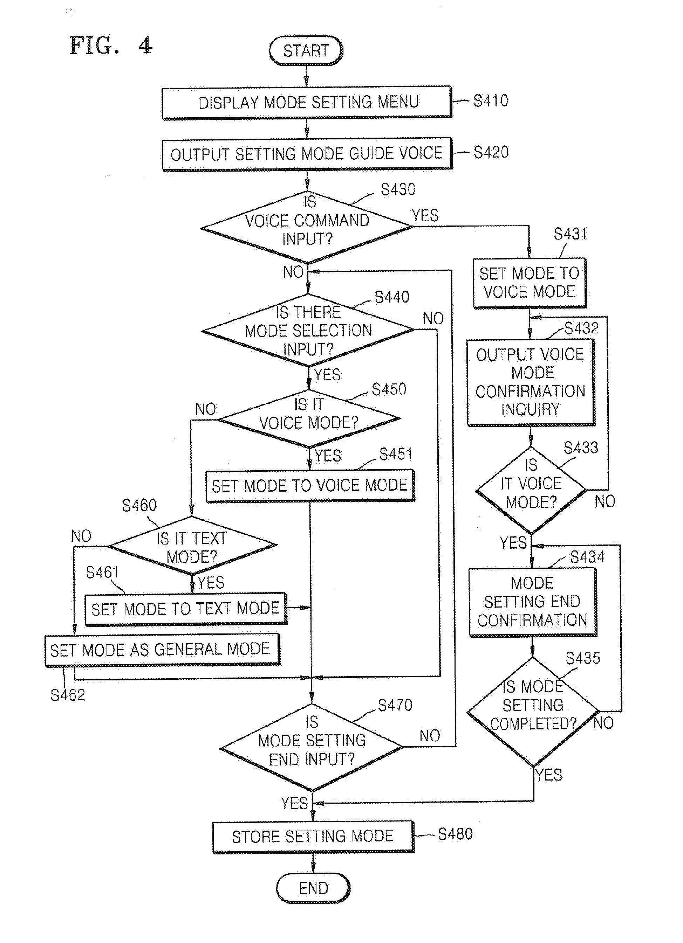

FIG. 4 is a flowchart illustrating a mode setting method according to an exemplary embodiment of the present invention. Referring to FIG. 4, if a user requests mode setting, the data processing control unit 300 displays a mode setting menu on the display unit 500 (Operation S410), outputs a sound to guide a user in setting an appropriate mode via the voice output unit 400 (Operation S420), and determines whether a voice command is input (Operation S430).

If it is determined that a voice command is input, the data processing control unit 300 sets a mode to a voice mode (Operation S431), outputs a confirmation voice inquiry asking a user if the voice mode is correct (Operation S432), and determines whether the voice mode is correct (Operation S433). If it is determined that the voice mode is correct, the data processing control unit 300 outputs a confirmation voice inquiry asking a user if the mode setting is completed (Operation S434) and determines whether the mode setting is completed (Operation S435). If it is determined that the mode setting is completed, the data processing control unit 300 stores the setting mode (Operation S480).

If it is determined that a voice command is not input, the data processing control unit 300 determines whether a mode selection is input (Operation S440). If a mode selection is input, the data processing control unit 300 determines whether the input mode selection indicates a voice mode (Operation S450), and if it is determined that the input mode selection indicates the voice mode, the data processing control unit 300 sets the mode to the voice mode (Operation S451). If it is determined that the input mode selection does not indicate the voice mode, the data processing control unit 300 determines whether the input mode selection indicates a text mode (Operation S460), and if it is determined that the input mode selection indicates the text mode, the data processing control unit 300 sets the mode to the text mode (Operation S461). Otherwise, if it is determined that the input mode selection does not indicate the text mode, the data processing control unit 300 sets the mode to a general mode (Operation S462). After the mode setting is completed, the data processing control unit 300 determines whether a mode setting end is input (Operation S470). If it is determined that the mode setting end is input, the data processing control unit 300 stores the setting mode (Operation S480) to complete the mode setting. If it is determined that the mode setting end is not input, the data processing control unit 300 repeats the mode selection process.

To provide user convenience, the mode setting method of the current exemplary embodiment of the present invention can be a display setting method using a graphic user interface (GUI) or a voice mode setting method using a voice guide for the blind.

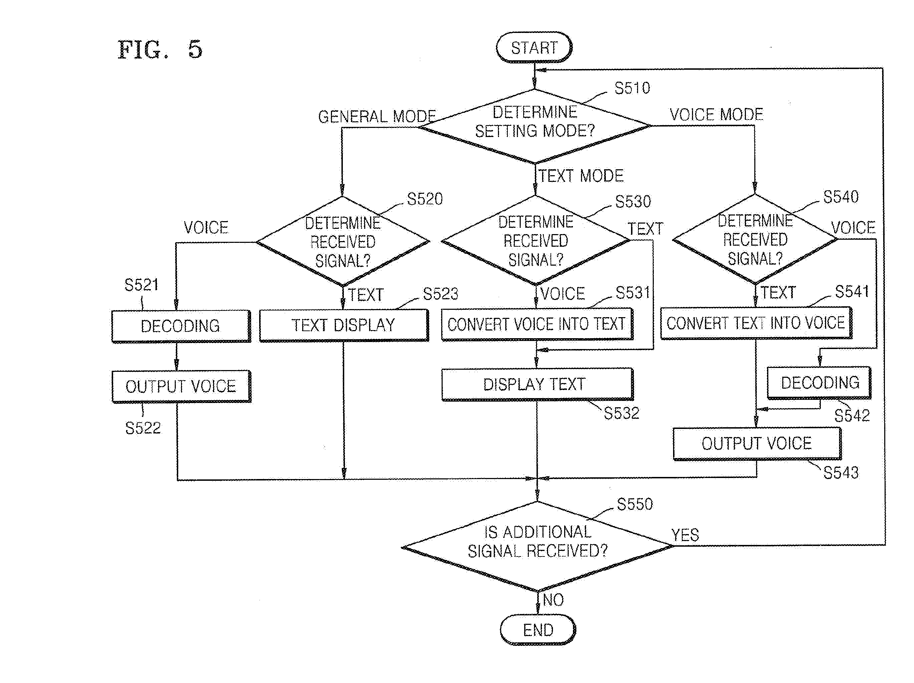

An exemplary embodiment of an operation of receiving voice data or text data using the first VoIP device of the present invention will now be described with reference to FIGS. 3 and 5.

A VoIP terminal can receive a text signal and a voice signal simultaneously with or without an image signal.

Reproduction of the voice signal or the text signal with the image signal is a general technology and thus a description thereof is not provided here. Thus, only reproduction of the voice signal or the text signal will be described, regardless of whether the image signal is received.

The data reception unit 110 of the first VoIP device comprises a text reception port 111 and a voice reception port 112 as illustrated in FIG. 3.

If the voice signal and the text signal are received via the text reception port 111 and the voice reception port 112 of the data reception unit 110, the data processing control unit 300 determines a setting mode according to a setting mode previously set by the mode selection unit 350 or a selection signal input using a hot key of the keyboard 220 (Operation S510). The first switching unit 310 and the second switching unit 320 differently process the input voice signal and text signal according to the mode selection signal of the mode selection unit 350.

If the setting mode is a general mode, the data processing control unit 300 determines whether a received signal is a text signal or a voice signal (Operation S520), If the received signal is a text signal the data processing control unit 300 displays the text signal as text on the display unit 500 (Operation 523). If the received signal is a voice signal, the data processing control unit 300 decodes the voice signal (Operation 521), and outputs the decoded voice signal to the voice output unit 400 (Operation 522).

If the setting mode is a text mode, the data processing control unit 300 determines if the received signals are voice signals or text signals (Operation S530) and divides the received signals into a voice signal and a text signal. Then the data processing control unit 300 converts the received voice signal into text data via the text conversion unit 340 (Operation S531) and outputs the converted text data with the received text signal on the display unit 500 (Operation S532). A text display screen can be realized in software supported by an OS. The text data can be processed in a conventional manner.

If the setting mode is a voice mode, the data processing control unit 300 determines if the received signals are text signals or voice signals (Operation S540). Then the data processing control unit 300 converts received text signals into voice via the voice conversion unit 330 (Operation S541) and decodes the received voice signal (Operation S542) and outputs the converted voice and the decoded voice signal to the voice output unit 400 (Operation S543). The voice conversion unit 330 that converts text into voice can be realized as an IC or in software.

When the data processing control unit 300 has finished processing data according to the general mode, the text mode, or the voice mode, the data processing control unit 300 determines if an additional signal is received (Operation S550). If it is determined that the additional signal is received, Operations S510 through S543 are repeated. If it is determined that the additional signal is not received, the data processing operation is ended.

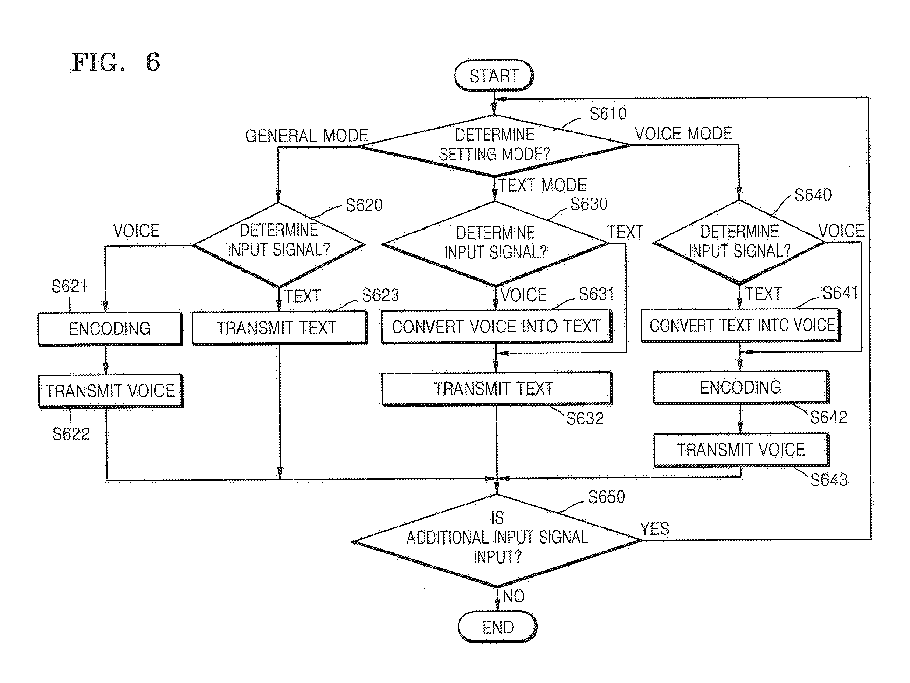

The operation of transmitting voice data or text data using the VoIP device according to an exemplary embodiment of the present invention will now be described with reference to FIGS. 3 and 6.

A VoIP terminal can transmits a text signal and a voice signal simultaneously with or without an image signal. The VoIP terminal transmits the voice signal or the text signal regardless of whether the image signal is transmitted.

Referring to FIG. 3, the data input unit 200 of the VoIP device of an exemplary embodiment of the present invention comprises the microphone 210 for inputting voice and the keyboard 220 for inputting text. The data transmission unit 120 comprises a text transmission port 121 and a voice transmission port 122.

Fig. 6 is a flowchart illustrating a data transmission method according to an exemplary embodiment of the present invention. If voice data and text data are input via the microphone 210 and the keyboard 220 of the data input unit 200, the data processing control unit 300 determines a setting mode according to a setting mode previously set by the mode selection unit 350 or a selection signal input using a hot key of the keyboard 220 (Operation S610). The first switching unit 310 and the second switching unit 320 differently process the input voice signal and text signal according to the mode selection signal of the mode selection unit 350.

If the setting mode is a general mode, the data processing control unit 300 determines whether an input signal is a text signal or a voice signal (Operation S620), outputs the text signal as text to the text transmission port 121 of the data transmission unit 120 (Operation S623), encodes the voice signal (Operation S621), and outputs the encoded voice signal to the voice transmission port 122 of the data transmission unit 120 (Operation S622).

If the setting mode is a text mode, the data processing control unit 300 determines if the input signals are the voice signal or the text signal (Operation S630), converts the received voice signal into text data via the text conversion unit 340 (Operation S631), outputs the converted text data with the input text signal to the text transmission port 121 of the data transmission unit 120, and transmits the converted text data with the input text signal in the format of text via VoIP communication (Operation S632). The transmitted converted text data with the input text signal can be displayed on the display unit 500. The text can be processed in a conventional manner.

If the setting mode is a voice mode, the data processing control unit 300 determines if the input signals are the text signal or the voice signal (Operation S640), converts the input text signal into voice via the voice conversion unit 330 (Operation S641), encodes the converted voice data and the input voice signal (Operation S642), outputs the encoded voice data and voice signal to the voice transmission port 122 of the data transmission unit 120 as the voice signal, and transmits the encoded voice data and voice signal in the format of voice via VoIP communication (Operation S643). The output voice signal and voice data can be output to the voice output unit 400 as voice.

When the data processing control unit 300 has finished processing data according to the general mode, the text mode, or the voice mode, the data processing control unit 300 determines if an additional input signal is input (Operation S650). If it is determined that the additional input signal is input, Operations S610 through S643 are repeated. If it is determined that the additional input signal is not input, the data processing control unit 300 ends the data processing operation.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed network coupled computer systems so that the computer readable code is stored and executed in a distributed fashion.

According to an exemplary embodiment of the present invention, a video communication apparatus using VoIP communication that converts voice data into a text signal or text data into a voice signal according to a selection mode has the effect as addressed below.

First, a VoIP network is provided to a display device such as a monitor so that a user can freely and conveniently make a video phone call between display devices, convert voice to text, and transmit/receive voice and text.

Second, a variety of mode setting functions are provided, including a GUI type mode setting method for deaf users and a voice mode setting method for blind users.

Third, a display device in which the VoIP network is provided can convert voice to text and transmit/receive voice and text with an authenticated cellular phone, thereby providing users with convenience.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A video communication apparatus using a voice over Internet protocol (VoIP) comprising:
a data reception unit which receives at least one data signal comprising at least one of video data, voice data, and text data;
a data processing control unit which converts the voice data received from the data reception unit into text data or which converts the text data received from the data reception unit into voice data;
a voice output unit which outputs the voice data processed by the data processing control unit as voice signals; and
a display unit which displays the text data processed by the data processing control unit as text signals.

2. The video communication apparatus of claim 1, wherein the data processing control unit comprises:
a voice conversion unit which converts input text data into voice signals; and
a text conversion unit which converts input voice data into text.

3. The video communication apparatus of claim 2, wherein the data processing control unit further comprises:
a first switching unit which receives the voice data from the data reception unit and which inputs the voice data to one of the voice output unit and the text conversion unit;
a second switching unit which receives the text data from the data reception unit and which inputs the text data to one of the display unit and the voice conversion unit; and
a mode selection unit which controls the first switching unit and the second switching unit.

4. The video communication apparatus of claim 3, wherein the mode selection unit comprises a storage unit storing a setting mode.

5. The video communication apparatus of claim 1, wherein the display unit converts the video data into image signals and displays the image signals with the text signals.

6. A video communication apparatus using a VoIP comprising:
a data input unit which inputs at least one data signal comprising at least one of video data, voice data, and text data;
a data processing control unit which converts voice data received from the data input unit into text data or which converts text data received from the data input unit into voice data; and
a data transmission unit which outputs the voice data or the text data of the data processing control unit via VoIP communication.

7. The video communication apparatus of claim 6, wherein the data processing control unit comprises:
a voice conversion unit which converts input text data into voice signals; and
a text conversion unit which converts input voice data into text.

8. The video communication apparatus of claim 7, further comprising:
a first switching unit which receives the voice data from the data input unit and which inputs the voice data to one of the data transmission unit and the text conversion unit;
a second switching unit which receives the text data from the data input unit and which inputs the text data to one of the data transmission unit and the voice conversion unit; and
a mode selection unit which controls the first switching unit and the second switching unit.

9. The video communication apparatus of claim 8, further comprising:
a voice output unit which outputs the voice data processed by the data processing control unit as voice signals; and
a display unit which outputs the text data processed by the data processing control unit as text signals.

10. The video communication apparatus of claim 8, wherein the mode selection unit comprises a storage unit which stores a previously set mode.

11. A data reception method of a video communication apparatus using VoIP communication, the method comprising:
receiving at least one data signal comprising at least one of video data, voice data, and text data;
converting the voice data into text data or converting the text data into voice data according to a previously set mode and the received data; and
outputting the voice data or the text data obtained by the converting to a user.

12. The method of claim 11, further comprising: setting a reception mode.

13. The method of claim 12, wherein the setting of the reception mode is performed according to a voice guide.

14. The method of claim 12, wherein the setting of the reception mode is performed through a graphic user interface (GUI).

15. The method of claim 11, wherein the previously set mode is one of a voice mode, a text mode, and a general mode.

16. The method of claim 15, wherein the previously set mode is the voice mode, and the text data is converted into voice data and output as voice data.

17. The method of claim 15, wherein the previously set mode is the text mode, and the voice data is converted into text data and output as text data obtained by the converting.

18. A data transmission method of a video communication apparatus using VoIP communication, the method comprising:
inputting one or more data signals among video data, voice data, and text data;
converting the voice data into the text data or converting the text data into the voice data according to a previously set mode; and
transmitting the converted voice data or the converted text data via VoIP communication.

19. The method of claim 18, further comprising: setting a transmission mode.

20. The method of claim 18, wherein the previously set mode is one of a voice transmission mode, a text transmission mode, and a general transmission mode.

21. A computer readable recording medium storing a computer readable program for executing a method of claim 11.

22. A computer readable recording medium storing a computer readable program for executing a method of claim 18.
